(19) Europäisches Patentamt
European Patent Office
Office européen des brevets

(11) Publication number: **0 405 192 A1**

(12) **EUROPEAN PATENT APPLICATION**

(21) Application number: **90110591.6**

(22) Date of filing: **05.06.90**

(51) Int. Cl.5: **C08L 55/02**, C08K 5/00, //(C08L55/02,71:03)

(30) Priority: **30.06.89 US 374018**

(43) Date of publication of application: **02.01.91 Bulletin 91/01**

(84) Designated Contracting States: **DE FR GB IT NL**

(71) Applicant: **GENERAL ELECTRIC COMPANY**
**1 River Road**
**Schenectady New York 12305(US)**

(72) Inventor: **Kozmiski, Stanley John**
**4801 Devon Lane**
**Alpharetta Georgia 30201(US)**

(74) Representative: **Catherine, Alain**
**General Electric France Service de Propriété Industrielle 18 Rue Horace Vernet**
**F-92136 Issy-Les-Moulineaux Cedex(FR)**

(54) **Polymer blend compositions.**

(57) Antistatic polymer blend compositions comprise an ABS graft copolymer, a copolymer of an epihalohydrin and a copolymerizable monomer having an oxirane group, and a surfactant.

EP 0 405 192 A1

# POLYMER BLEND COMPOSITIONS

FIELD OF THE INVENTION: Polymers having electrostatic dissipative properties.

## BACKGROUND OF THE INVENTION:

This invention is an improvement on the inventions described and claimed in U.S. Patents 4,588,773 (Federl et al I) and 4,775,716 (rederl et al II) and U.S. patent application Ser. No. 59,178, filed June 8, 1987 (Gaggar et al), all of which are assigned to the predecessor of the present application's assignee.

Federl et al I relates to the use of an ABS graft copolymer containing an antistatic agent consisting essentially of a copolymer of epichlorohydrin and an oxirane composition, ethylene oxide. Federl et al II, a contirtuation-in-part of Federl et al I, also concerns an antistatic graft ABS, but one which contains smaller amounts of an epichlorophyorin/oxirane copolymer having a somewhat higher ratio of ethylene oxide to epichlorohydrin in said copolymer. US Patent Application Ser. No. 59,178 (Gaggar et al) is directed to the use of an alkyl methacrylate polymer to compatibilize the antistatic composition with the ABS polymer.

US Patent No.4,719,263 (Barnhouse et al), discloses that the antistatic properties of various polymers may be improved by adding a copolymer of epichlorohydrin and ethylene oxide.

In US Patent 4,315,081 (Kobayashi et al) there is described a graft polymer containing an anionic surfactant to render the base resin antistatic. This patent is directed to specific graft polymers in which the rubbery backbone or trunk is a copolymer of a conjugated diene and a polyalkylene oxide monomer, although conventional ABS examples are given as controls. These polymers are purportedly rendered antistatic by the incorporation of up to about 5 wt.% of an anionic surfactant. A feature distinguishing Kobayashi from the present invention is that in the former, the surfactant is the only ingredient added for the promotion of antistatic properties. Moreover, since the test method described in the specification is not widely recognized, it is not possible to determine the absolute value of the antistatic properties attainable.

In the Gaggar et al application, it was pointed out that certain properties such as tensile strength, heat distortion temperature and modulus are adversely affected by the introduction of the epichlorohydrin/ethylene oxide copolymer. Even the lower levels of loading described in the Federl et al II patent result in poorer physical properties. The use of an alkyl methacrylate polymer, such as poly (methyl methacrylate) promotes the compatibility between the base polymer and the copolymer.

## SUMMARY OF THE INVENTION

The present invention is directed to the use of certain surfactants to synergistically improve the antistatic properties of ABS polymers using epichlorohydrin and ethylene oxide copolymer as an antistatic agent. While there are references to the use of such copolymers in ABS, for example in the various references mentioned above, there are no teachings of the enhancement of the antistatic properties with a synergist, such as the anionic, cationic and nonionic surfactants used in the present invention.

## DETAILED DESCRIPTION:

The need for thermoplastic molding compositions which rapidly dissipate a static charge has grown substantially in recent years. It is reliably estimated that static electricity costs industry millions of dollars in expensive repair and replacement of sensitive electronic components alone. Major applications for such material include tote boxes for the storage of computer chips and other electronic components, xerographic copier parts and communications equipment. Static electricity is also a major hazard where explosive materials are present.

Static electricity is very expensive to control in polymeric materials. Until the invention of Federl I, thermoplastics were generally rendered at least partially antistatic by the incorporation of conductive materials into the resin, such as carbon black particles, or carbon (or metallic) fibers. The literature is replete with attempts to render polymers antistatic all of which have met with less than sucessful results.

ABS is one of the most commmercially important thermoplastics manufactured in significant guantities. Its major uses include automotive components, electronic/computer applications, appliances and construction. Its versatility makes it one of the most important engineering resins manufactured worldwide.

ABS polymers are styrenic resins containing two or more polymeric parts of different compositions that are bonded chemically. The polymer is preferably prepared by polymerizing a conjugated diene, such as butadiene or a conjugated diene with a monomer copolymerizable therewith, such as styrene, to provide a polymeric backbone. After formation of the backbone, at least one grafting monomer, and preferably two, are polymerized in the presence of the prepolymerized backbone to obtain the graft polymer. These resins are prepared by methods well known in the art.

The backbone polymer, as mentioned, is preferably a conjugated diene polymer such as polybutadiene, polyisoprene, or a copolymer, such as butadiene-styrene, butadiene-acrylonitrile, or the like.

The specific conjugated diene monomers normally utilized in preparing the backbone of the graft polymer are generically described by the following formula:

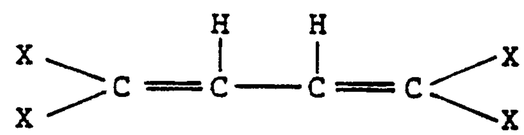

wherein X is selected from the group consisting of hydrogen, alkyl groups containing from one to five carbon atoms, chlorine or bromine. Examples of dienes that may be used are butadiene, isoprene, 1,3-heptadiene, methyl-1,3-pentadiene, 2,3-dimethyl-1,3-butadiene, 2-ethyl-1,3-pentadiene; 1,3- and 2,4-hexadienes, chloro and bromo substituted butadienes such as dichlorobutadiene, bromobutadiene, dibromobutadiene, mixtures thereof, and the like. A preferred conjugated diene is butadiene.

One monomer or group of monomers that may be polymerized in the presence of the prepolymerized backbone are monovinylaromatic hydrocarbons.

The monovinylaromatic monomers utilized are generically described by the following formula:

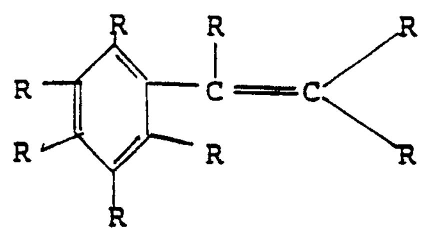

wherein each R is selected from the group consisting of hydrogen, alkyl, halogen, cycloalkyl, aryl, alkaryl, aralkyl, alkoxy and aryloxy groups. Examples of the monovinylaromatic compounds and alkyl-, cycloalkyl-, aryl-, alkaryl-, aralkyl-, alkoxy-, aryloxy-, and other substituted vinylaromatic compounds include styrene, 4-methylstyrene; 3,5-diethylstyrene, 4-n-propylstyrene, a-methylstyrene, a-methyl vinyltoluene, a-chlorostyrene, a-bromostyrene, dichlorostyrene, dibromostyrene, tetra-chlorostyrene, mixtures thereof, and the like. The preferred monovinylaromatic hydrocarbons used are styrene and/or a-methylstyrene.

A second group of monomers that may be polymerized in the presence of the prepolymerized backbone are acrylic monomers such as acrylonitrile, substituted acrylonitrile, and/or acrylic acid esters, exemplified by acrylonitrile, and alkyl acrylates such as methyl methacrylate.

The acrylonitrile, subsituted acrylonitrile, or acrylic acid esters are described generically by the following formula:

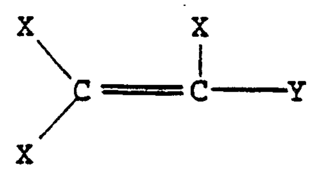

wherein X is as previously defined and Y is selected from the group consisting of cyano and carbalkoxy wherein the alkoxy group of the carbalkoxy contains from one to about twelve carbon atoms. Examples of such monomers include acrylonitrile, ethacrylonitrile, methacrylonitrile, a-chloroarylonitrile, b-chloroacrylonitrile, a-bromoacrylonitrile, and b-bromoacrylonitrile, methyl acrylate, methyl methacrylate,

ethyl acrylate, butyl acrylate, propylacrylate, isopropyl acrylate and mixtures thereof. The preferred acrylic monomer is acrylonitrile and the preferred acrylic acid esters are ethyl acrylate and methyl methacrylate.

In the preparation of the graft polymer, the conjugated diene polymer or copolymer exemplified by a 1,3-butadiene polymer or copolymer comprises about 30 to about 75% by weight of the total graft polymer composition. The monomers polymerized in the presence of the backbone, exemplified by styrene and acrylonitrile, comprise from about 25 to about 90% by weight of the total graft polymer composition.

The monovinylaromatic hydrocarbon exemplified by styrene comprises from about 30 to about 70% by weight of the total graft polymer composition. The second group of grafting monomers, exemplified by acrylonitrile, ethyl acrylate or methyl methacrylate, of the graft polymer composition, preferably comprise from about 10% to about 40% by weight of the total graft copolymer composition. In preparing the polymer, it is normal to have a certain percentage of the polymerizing monomers that are grafted on the backbone combine with each other and occur as free copolymer. If styrene and acrylonitrile are utilized as the grafting monomers, a certain portion of the composition will copolymerize as free styrene-acrylonitrile copolymer. In the case where a-methylstyrene (or other monomer) is substituted for the styrene in the composition used in preparing the graft polymer, a certain percentage of the composition may be an a-methylstyrene-acrylonitrile copolymer. Also, there are occasions where a copolymer, such as a-methylstyrene-acrylonitrile, is added to the graft polar copolymer blend. When a graft polymer-copolymer blend is referred to herein, it is meant optionally to include at least one copolymer blended with the graft polymer composition and which may contain up to 90% of free copolymer.

Optionally, the elastomeric backbone may be an acrylate rubber, such as one based on n-butyl acrylate, ethylacrylate, 2-ethylhexylacrylate, and the like. Additionally, minor amounts of a diene may be copolymerized in the acrylate rubber backbone to yield improved grafting with the matrix polymer.

These resins are well known in the art and many are commercially available.

The antistatic agent, which constitutes about 5 to about 20 wt% of the blend, is a copolymer of an epihalohydrin, preferably epichlorohydrin, and an alkylene oxide, preferably ethylene oxide. Epihalohydrin monomers have the formula:

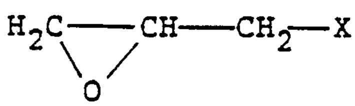

wherein X is chlorine, bromine or iodine. Preferably X is chlorine, i.e. epichlorohydrin.

The epihalohydrin may be copolymerized with any of a variety of other known, copolymerizable monomers which have an oxirane group. Such monomers include glycidyl ethers, monoepoxides of dienes and polyenes, glycidyl esters and alkylene oxides. Examples of such monomers include vinyl glycidyl ether, isopropenyl glycidyl ether, butadiene monoxide, chloroprene monoxide, 3,4-epoxy-1-pentene, glycidyl acrylate, glycidyl methacrylate, 1,2-epoxy-3,3,3,trichloropropane, phenyl glycidyl ether, ethylene oxide, propylene oxide and trichlorobutylene oxide.

Preferably the monomer is an alkylene oxide such as ethylene oxide, propylene oxide, butylene oxide, 3,4-epoxy-1-pentene, 1,2-epoxy-3,3,3-trichloropropane, trichlorobutylene oxide and the like. Ethylene oxide is most preferred.

In the preferred embodiment, epichlorohydrin and ethylene oxide are copolymerized to form an epichlorohydrin rubber. Materials of this type are made commercially under the trademark HYDRIN (B.F.Goodrich).

The discovery that anionic surfactants promote the antistatic activity of the epichlorohydrin/ethylene oxide copolymers is of considerable importance. First of all, the antistatic agent is relatively expensive, being available only at a cost of 5-6 times the cost of the base ABS resins. Also, most antistatic agents of the type preferred for use in the present invention have a tendency to degrade certain physical properties of the ABS. Still another problem encountered is that some reaction takes place between the antistatic agent and the ABS which produces an undesirable odor. It follows then that reducing the amount of antistatic composition that has to be blended into the ABS results in lower manufacturing costs and better overall quality without sacrificing the physical properties of the resin. The synergistic surfactants of the of the present invention are effective in enhancing the electrostatic dissipative properties so that relatively smaller quantities of the electrostatic agent need be incorporated into the ABS.

Surfactants generally are wetting agents having a molecule with a hydrophylic portion and a hydrophobic portion. Surfactants have long been used by themselves to polymers to render them non-dusting and have been recognized as capable of reducing the degree of static buildup on plastic parts, such as

audio/video tape cartridges and similar applications. It should be noted that anti-dust is not by any means to be considered as being equivalent to antistatic. Compositions using surfactants alone simply do not measure up to the stringent requirements of Federal Test Method 3018, method 4046.

Anionic surfactants are preferred but cationic and nonionic surfactants also are effective. Also, suitable for use in this invention are cationic surfactants, for example quaternary ammonium compounds, provided with an anionic surfacant substituent for improving their thermal stability. Such surfactants may be referred to as cationic/anionic surfactants. The largest class of anionic surfactants comprises alkylaryl sulfonates and derivatives thereof, such sas sodium dodecylbenzene sulfonate (SDBS) and aryl sulfonates such as potassium diphenylsulfone sulfonate (KSS). Examples of cationic and nonionic surfactants are, respectively, modified onium salts and polyethylene oxides.

Preferably, the surfactant is included in the compositions of the invention in an amount in the range of about 0.1 to about 5 weight percent, and, more preferably, in the range of about 0.5 to about 3 weight percent.

The invention can best be understood by referring to certain specific examples of the compositions generally described above.

**Examples 1-7**

In these and the following examples, blends were prepared using a Banbury mixing apparatus at a drop temperature of 370° F. Testing for electrostatic discharge properties was performed on injection molded discs using Federal Test Method 101B, Method 4046, the specifications of which are incorporated herein by reference. The blend recipes and electrostatic dissipation (ESD) performance of the blends are summarized in Table I below.

The ABS component employed in Examples 1-7 was a high rubber graft (HRG) comprising approximately 50 weight percent rubber, 35 weight percent styrene and 15 weight percent acrylonitrile. The compositions also included a styrene-acrylonitrile copolymer component (SAN) containing approximately 72 weight percent styrene and 28 weight percent acrylonitrile, and magnesium stearate (MgSt). The antistatic agent (ECHEO) employed was an epichlorohydrin-ethylene oxide copolymer, while the surfactant employed was selected from sodium dodecylbenzene sulfonate (SDBS) and potassium diphenylsulfone sulfonate (KSS). The compositions also included polymethylmethacrylate (Rohm & Haas V920).

TABLE I

| Ex. No. | 1 | 2 | 3 | 4 | 5 | 6 | 7 |
|---|---|---|---|---|---|---|---|
| ABS HRG | 25.5 | 25.5 | 25.5 | 25.5 | 25.5 | 28 | 28 |
| SAN Copolymer | 58 | 58 | 58 | 58 | 58 | 62 | 62 |
| ECHEO | 12 | 12 | 12 | 12 | 12 | 10 | 10 |
| PMMA | 4.5 | 4.5 | 4.5 | 4.5 | 4.5 | | |
| EBS Wax | 1 | 1 | 1 | 1 | 1 | 1 | 1 |
| MgSt | 0.5 | 0.5 | 0.5 | 0.5 | 0.5 | 0.5 | 0.5 |
| SDBS | | 1 | 2 | | | | |
| KSS | | | | 1 | 2 | | 1 |
| ESD decay time, sec. | | | | | | | |
| 24 hr. after molding 10% | 1.65 | 0.17 | 0.11 | 0.1 | 0.07 | 3.25 | 0.26 |
| 0% | >30 | 1.59 | 1.03 | 1.1 | 0.189 | >30 | 3.23 |
| 19 hr. after cleaning 10% | 2 | 0.15 | 0.1 | 0.08 | 0.06 | 5.3 | 0.43 |
| 0% | >30 | 1.42 | 0.9 | 0.94 | 0.8 | >30 | 8.70 |

The data in Table I clearly indicates a dramatic improvement in the ESD properties using anionic

surfactants as a synergist. While SDBS and KSS were used in the examples, related compositions may be used with confidence that improved performance will be obtained.

**Examples 8-14**

Additional examples were prepared and tested to determine the effect, if any, that the inclusion of such anionic surfactants has on other styrenic polymers by themselves, and, combined with a compatibilizing agent such as polymethylmethacrylate (PMMA), has on ESD performance and a key physical property, such as Izod impact strength. The recipes of Examples 8-14 were prepared in the same manner described in connection with Examples 1-7 and then were compression molded into test bars. Test bars were tested for the ESD and Izod impact strength, the results of which are set forth in Table II below.

Table II

| Ex. No. | 8 | 9 | 10 | 11 | 12 | 13 | 14 |
|---|---|---|---|---|---|---|---|
| Mobil HIPS 4154 | 90 | 90 | 90 | 90 | 90 | 86 | 82 |
| ECHEO | 10 | 10 | 10 | 10 | 10 | 10 | 10 |
| PMMA | | | | | | 4 | 8 |
| EBS Wax | 1 | 1 | 1 | 1 | 1 | 1 | 1 |
| MgSt | 0.5 | 0.5 | 0.5 | 0.5 | 0.5 | 0.5 | 0.5 |
| SDBS | | 1 | 2 | | | | |
| KSS | | | | 1 | 2 | 1 | 1 |
| ESD Decay Time | | | | | | | |
| (24 hr.) 10% | 0.21 | 0.14 | 0.14 | 0.04 | 0.04 | 0.01 | 0.15 |
| (@15%rh) 0% | 3.5 | 1.28 | 1.14 | 0.444 | 0.47 | 0.1 | 0.99 |
| Izod Impact | 3.8 | 3.3 | 2.3 | 3.6 | 3.4 | 3.3 | 2.9 |

**Examples 15-24**

In these examples, additional compositions according to the present invention were prepared wherein the surfactant employed was a cationic/anionic surfactant or a nonionic surfactant. Specifically, the cationic/anionic surfactants which were employed in these examples were selected from the following: Larostat 904 (imidazoline-type paratoluene sulfonate), Larostate 905 (octyldimethyl ethoxyammonium methane sulfonate) and Larostat 906 (octyldimethyl ethoxy ammonium dodecylbenzene sulfonate). The nonionic surfactants employed in these examples were selected from Armostat 410 (bis(hydroxyethyl)coco amine) and Exxon E17-2 (dihydroxy ethyl isodecyl oxypropylamine). The compositions of these examples also included an ABS graft copolymer, a SAN copolymer, an ECHEO antistatic agent and a PMMA polymer as described in Examples 1-7. The compositions of Examples 15-24 were blended in the manner described with respect to Examples 1-7 and then were compression molded into test bars. The test bars were subjected to measurement of the ESD and Izod impact strength properties The recipes of the compositions of Examples 15-24 and the results of the aforementioned measurements are set forth in Table 3.

TABLE 3

| Ex. No. | 15 | 16 | 17 | 18 | 19 | 20 | 21 | 22 | 23 | 24 |
|---|---|---|---|---|---|---|---|---|---|---|
| ABS | 24 | 24 | 24 | 24 | 24 | 24 | 24 | 24 | 24 | 24 |
| SAN | 60 | 60 | 60 | 60 | 60 | 60 | 60 | 60 | 60 | 60 |
| ECHEO | 12 | 12 | 12 | 12 | 12 | 12 | 12 | 12 | 12 | 12 |
| PMMA | 4.5 | 4.5 | 4.5 | 4.5 | 4.5 | 4.5 | 4.5 | 4.5 | 4.5 | 4.5 |
| MgSt | 0.5 | 0.5 | 0.5 | 0.5 | 0.5 | 0.5 | 0.5 | 0.5 | 0.5 | 0.5 |
| EBS Wax | 1 | 1 | 1 | 1 | 1 | 1 | 1 | 1 | 1 | 1 |
| Armostat 410 | 1 | 2 | | | | | | | | |
| Exxon E17-2 | | | 1 | 2 | | | | | | |
| HTS 904 Larostat | | | | | 1 | 2 | | | | |
| HTS 905 Larostat | | | | | | | 1 | 2 | | |
| HTS 906 Larostat | | | | | | | | | 1 | 2 |
| ESD decay time, seconds | | | | | | | | | | |
| 1 day 10% | 0.77 | 0.57 | 0.97 | 0.53 | 0.22 | 0.16 | 0.14 | 0.1 | 0.21 | 0.15 |
| @ 15% rh 0% | 5.3 | 3.3 | >30 | 3.3 | 2 | 1.35 | 1.58 | 1.16 | 2.09 | 1.44 |
| 1 week 10% | 0.52 | 0.41 | 0.99 | 0.45 | 0.24 | 0.17 | 0.14 | 0.09 | 0.2 | 0.14 |
| @ 15% rh 0% | 2.5 | 2.08 | >30 | 2.3 | 2.02 | 1.42 | 1.26 | 0.91 | 1.68 | 1.24 |
| 24 hours after cleaning 0% | >30 | 3.7 | >30 | 4.4 | 2.20 | 1.57 | 1.48 | 1.19 | 2.35 | 1.61 |
| Izod ft#/in | 3 | 3 | 3.1 | 3 | 2.8 | 2 | 3 | 3 | 3.2 | 2.9 |

While this invention has been described in connection with certain specific embodiments, it will be obvious to those skilled in the art that other combinations may be used. Accordingly the scope of the invention should be determined solely by the appended claims.

## Claims

1. A polymer blend composition comprising an ABS graft copolymer, a copolymer of an epihalohydrin and a copolymerizable monomer having an oxirane group, and a surfactant.
2. A polymer blend composition as defined by claim 1, wherein the epihalohydrin copolymer and the surfactant are included in synergistic antistatic-improving amounts.
3. A polymer blend composition as defined by claim 1, wherein the epihalohydrin copolymer is included in an amount of from about 5 to about 20 weight percent.
4. A polymer blend composition as defined by claim 1, wherein the surfactant is included in an amount of about 0.1 to about 5 weight percent.
5. A polymer blend composition as defined by claim 1, wherein the epihalohydrin copolymer is formed from epichlorohydrin and a copolymerizable monomer selected from the group consisting of glycidyl ethers, monoepoxides of dienes and polyenes, glycidyl esters and alkylene oxides.
6. A polymer blend composition as defined by claim 5, wherein the epihalohydrin copolymer is formed from epichlorohydrin and an alkylene oxide.
7. A polymer blend composition as defined by claim 6, wherein the epihalohydrin copolymer is formed from epichlorohydrin and ethylene oxide.
8. A polymer blend composition as defined by claim 1, wherein the surfactant comprises an anionic surfactant.
9. A polymer blend composition as defined by claim 8, wherein the anionic surfactant is selected from the group consisting of alkylaryl sulfonates, aryl sulfonates and derivatives thereof.
10. A polymer blend composition as defined by claim 1, wherein the surfactant comprises a cationic/anionic surfactant comprising a quaternary ammonium compound.
11. A polymer blend composition as defined by claim 1, wherein the surfactant comprises a cationic surfactant.
12. A polymer blend composition as defined by claim 1, wherein the surfactant comprises a nonionic surfactant.
13. A polymer blend composition as defined by claim 1, wherein the ABS graft copolymer comprises a

mixture of a backbone polymer to which grafting monomers are polymerized and a copolymer of the grafting monomers.

14. A method for improving the antistatic properties of an ABS graft copolymer, comprising adding to the ABS graft copolymer a copolymer of an epihalohydrin and a copolymerizable monomer having an oxerain group, and a surfactant.

European Patent Office

# EUROPEAN SEARCH REPORT

Application Number

EP 90 11 0591

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 201 097 (B.F. GOODRICH)<br>* Column 3, lines 25-37; column 4, lines 39-41; column 5, lines 5-11,25-30; column 5, line 45 - column 6, line 18; examples 5,6; claims * | 1-7,10,13,14 | C 08 L 55/02<br>C 08 K 5/00 //<br>(C 08 L 55/02<br>C 08 L 71:03 ) |
| X | EP-A-0 247 355 (BORG-WARNER CHEMICALS INC.)<br>* Page 2, lines 10-20; page 3, lines 13-25; page 6, lines 6-10; page 7, lines 25-28; claims * | 1-7,10,13,14 | |
| Y | EP-A-0 186 321 (BORG-WARNER CHEMICALS INC.)<br>* Page 3, lines 15-25; claims * | 1-11,13,14 | |
| Y | CHEMICAL ABSTRACTS, vol. 77, no. 16, 16th October 1972, page 35, abstract no. 102724w, Columbus, Ohio, US; & JP-A-71 43 988 (SANYO CHEMICAL INDUSTRIES, LTD) 27-12-1971<br>* Abstract * | 1-11,13,14 | TECHNICAL FIELDS SEARCHED (Int. Cl.5) |
| A | EP-A-0 282 985 (B.F. GOODRICH)<br>* Claims * | 1-14 | C 08 L<br>C 08 K |

The present search report has been drawn up for all claims

| Place of search | Date of completion of the search | Examiner |
|---|---|---|
| THE HAGUE | 28-08-1990 | IRAEGUI RETOLAZA E. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)